# EUROPÄISCHE PATENTSCHRIFT

(11) **EP 1 993 040 B1**
(45) Veröffentlichungstag und Bekanntmachung des Hinweises auf die Patenterteilung: **24.02.2010**
(21) Anmeldenummer: 08008322.3
(22) Anmeldetag: 02.05.2008
(51) Int. Cl.: G06F 13/40

(54) **Sensoreinheit mit mehreren Bedien-oder Funktionselementen**
Sensor unit with multiple operational or functional elements
Unité de capteur dotée de plusieurs éléments de commande ou de fonctionnement

(30) Priorität: 12.05.2007 DE 102007022342
(43) Veröffentlichungstag der Anmeldung: 19.11.2008
(73) Patentinhaber: ABB AG, 68309 Mannheim (DE)
(72) Erfinder: Clever, Gerhard, Dipl.-Ing., 58553 Halver (DE); Diehl, Sven, Dipl.-Ing., 57078 Siegen (DE); Goldyn, Dirk, Dipl.-Ing., 58454 Witten (DE); Grotensohn, Michael, Dipl.-Ing., 58454 Witten (DE); Lange, Manfred, Dipl.-Ing., 44229 Dortmund (DE); Quittmann, Olaf, Dipl.-Ing., 59846 Sundern (DE); Schneider, Martin, 42499 Hückeswagen (DE); Zierach, Falk, Dipl.-Ing., 58513 Lüdenscheid (DE)
(74) Vertreter: Partner, Lothar

(56) Entgegenhaltungen:
- EP-A- 0 772 132
- EP-A- 0 833 426
- DE-A1- 19 726 981

## Beschreibung

Die Erfindung bezieht sich auf eine Sensoreinheit mit mehreren Bedien- oder Funktionselementen und kann in der konventionellen Installationstechnik verwendet werden.

Aus der EP 1 168 395 A2 ist eine elektrische Schaltvorrichtung mit einem auf mindestens einen auf einer Schaltplatine angeordneten Schaltkontakt einwirkenden Tastschalter bekannt. Vorzugsweise sind mehrere Tast-Wippen vorgesehen. Die Schaltplatine besitzt elektrische Leitungsverbindungen zum elektrischen Anschluss an ein zu schaltendes Gerät.

Aus der EP-A- 0 772 132 (D1) ist eine Aktor/Sensor-Kombination für die Gebäudesystemtechnik mit mehreren Bedienteilen und mehreren Leistungsteilen bekannt, wobei Bedienungen an den Bedienteilen von einem Aktor-Busankoppler erfasst und Steuervorgänge in den Leistungsteilen ausgelöst werden. Durch Bedienung an den Bedienteilen können unterschiedliche Abläufe in den Leistungsteilen oder in den Bedienteilen ausgelöst werden. Der Datenaustausch zwischen dem Aktor-Busankoppler und dem Leistungsteil erfolgt mittels eines Mikrocontrollers über eine Anpassung. Dabei erfolgt der Datenaustausch mit dem jeweiligen Bedienteil und einem Mikrocontroller über eine Buchsenleiste und über eine Anpassung.

Aus der EP-A- 0 833 426 (D2) ist ein Installationssystem für eine Hausinstallation mit einem Installationsbus bekannt, an welchen eine Anzahl von Installationsgeräten (Sensoren, Aktoren) über jeweils einen Applikationsankoppler anschließbar ist. Jeder Applikationsankoppler weist einen Mikroprozessor auf, welcher einen Ausgang zum Anschluss an einen Adress-Kodierschalter besitzt. Durch Kodierung des Kodierschalters wird die Adresse eines Sensors eingestellt. Der Mikroprozessor weist einen flüchtigen Speicher als auch einen nicht-flüchtigen Speicher zur Vermeidung eines Adressen- und Kodierverlustes bei einem Spannungsausfall auf.

Der Erfindung liegt die Aufgabe zugrunde, eine universell und flexibel in unterschiedlicher Art und Weise auszugestaltende Sensoreinheit mit mehreren Bedien- oder Funktionselementen anzugeben.

Diese Aufgabe wird erfindungsgemäß gelöst durch eine Sensoreinheit mit mehreren Bedien- oder Funktionselementen nach Anspruch 1.

Aus der EP-A- 0 772 132 (D1) ist eine Aktor/Sensor-Kombination für die Gebäudesystemtechnik mit mehreren Bedienteilen und mehreren Leistungsteilen bekannt, wobei Bedienungen an den Bedienteilen von einem Aktor-Busankoppler erfasst und Steuervorgänge in den Leistungsteilen ausgelöst werden. Durch Bedienung an den Bedienteilen können unterschiedliche Abläufe in den Leistungsteilen oder in den Bedienteilen ausgelöst werden. Der Datenaustausch zwischen dem Aktor-Busankoppler und dem Leistungsteil erfolgt mittels eines Mikrocontrollers über eine Anpassung. Dabei erfolgt der Datenaustausch mit dem jeweiligen Bedienteil und einem Mikrocontroller über eine Buchsenleiste und über eine Anpassung.

Aus der EP-A- 0 833 426 (D2) ist ein Installationssystem für eine Hausinstallation mit einem Installationsbus bekannt, an welchen eine Anzahl von Installationsgeräten (Sensoren, Aktoren) über jeweils einen Applikationsankoppler anschließbar ist. Jeder Applikationsankoppler weist einen Mikroprozessor auf, welcher einen Ausgang zum Anschluss an einen Adress-Kodierschalter besitzt. Durch Kodierung des Kodierschalters wird die Adresse eines Sensors eingestellt. Der Mikroprozessor weist einen flüchtigen Speicher als auch einen nicht-flüchtigen Speicher zur Vermeidung eines Adressen- und Kodierverlustes bei einem Spannungsausfall auf.

Die mit der Erfindung erzielbaren Vorteile bestehen insbesondere darin, dass die in der Gebäudesystemtechnik geschätzten Vorteile, wie flexible beliebige Anordnung unterschiedlicher Bedien- oder Funktionselemente, beispielsweise Mehrfach-Tastelemente oder Displays, auch für die konventionelle Installationstechnik verfügbar gemacht werden. Der kostenintensive Einsatz eines Bussystems (z. B. KNX / EIB) innerhalb des Gebäudes ist nicht erforderlich. Insbesondere sind unter Verwendung einer einzigen Sensoreinheit komplexe Lichtsteuerungen (Lichtszenen) vorprogrammierbar und im Basisgerät einspeicherbar. Ein Abruf einer gewünschten Lichtszene erfolgt durch Betätigung des entsprechenden Bedienelements. Eine Erweiterung der Sensoreinheit (mittels eines weiteren Bedien- oder Funktionselements und/oder mittels eines weiteren Basisgeräts) ist zu einem späteren Zeitpunkt nach der Montage problemlos und kostengünstig möglich.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: den logischen Aufbau einer Sensoreinheit,
- Fig. 2: eine Sicht auf die Frontseite einer Sensoreinheit,
- Fig. 3: eine Seitenansicht einer Sensoreinheit,
- Fig. 4, 5: Varianten zur Ausführungsform gemäß Fig. 1,
- Fig. 6: eine Möglichkeit zur Information eines Basisgeräts über Bus-Details.

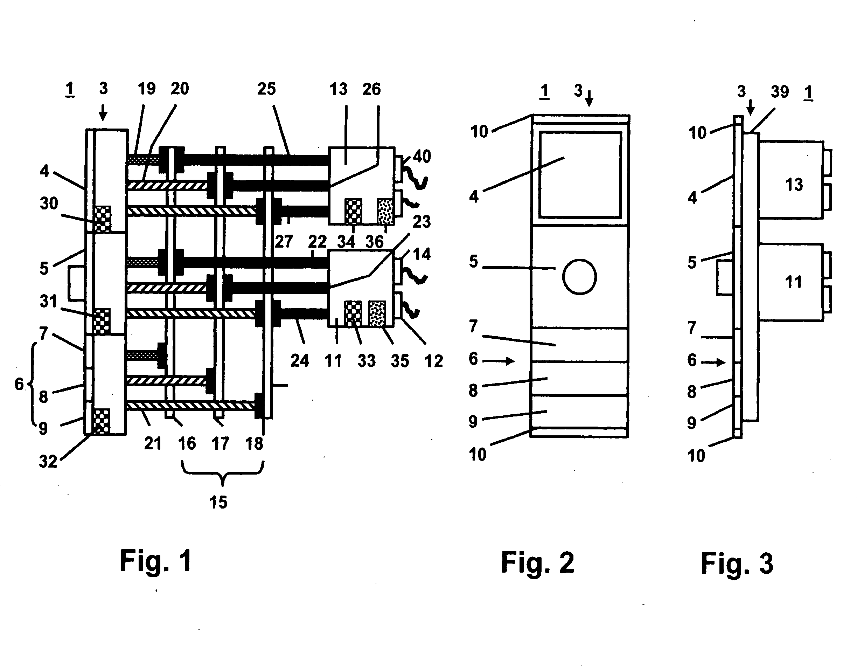

In Fig. 1 ist schematisch der logische Geräteaufbau einer Sensoreinheit 1 dargestellt. In einem Grundträger sind mehrere Bedien- oder Funktionselemente 3 eingebaut, beispielsweise
- in der oberen Position ein Display (Anzeigeelement) 4 inklusive Verarbeitungseinheit 30,
- unterhalb des Displays 4 ein Dreh-Drückelement 5 inklusive Drehknopf und Verarbeitungseinheit 31,
- unterhalb des Dreh-Drückelements 5 ein Mehrfach-Tastelement 6 mit drei Wippen 7, 8, 9 und einer Verarbeitungseinheit 32.

Der Grundträger ist mit mehreren elektrisch leitenden Schienen 15 versehen, und zwar mit
- Versorgungsschienen 16 für die Stromversorgung der Bedien- oder Funktionselemente,
- Kommunikationsschienen 17 für die Datenübertragung zwischen den Bedien- oder Funktionselementen und mindestens einem Basisgerät sowie gegebenenfalls verschiedenen Basisgeräten,
- Codierungsschienen 18.

Jedes der Bedien- oder Funktionselemente 3 ist über eine Kontaktierungseinheit 19 mit den Versorgungsschienen 16, über eine Kontaktierungseinheit 20 mit den Kommunikationsschienen 17 und über eine Kontaktierungseinheit 21 mit den Codierungsschienen 18 verbunden.

Ein Basisgerät 11 (vorzugsweise als in eine handelsübliche Standard-Unterputzdose montierbarer Unterputz-Einsatz mit Gerätesockel und Tragring ausgebildet) weist eine Verarbeitungseinheit 33 inklusive Speicher, ein Netzteil sowie eine Leistungskomponente 35 (Transistor- oder Thyristor- oder Triac-Schaltung, Relais) auf und ist über eine Kontaktierungseinheit 22 mit den Versorgungsschienen 16, über eine Kontaktierungseinheit 23 mit den Kommunikationsschienen 17 und über eine Kontaktierungseinheit 24 mit den Codierungsschienen 18 verbunden. Eine Anschlusseinheit 12 des Basisgeräts 11 stellt den Energieeinspeisungs-Anschluss (Netz-Anschluss) dar. Ferner weist das Basisgerät 11 einen Lastanschluss 14 für den Anschluss einer Last, z. B. einer ersten Beleuchtungseinrichtung auf.

Zusätzlich ist beim Ausführungsbeispiel gemäß Fig. 1 ein weiteres Basisgerät 13 vorgesehen, welches eine Verarbeitungseinheit 34, vorzugsweise ein Netzteil und eine Leistungskomponente 36 aufweist und über eine Kontaktierungseinheit 25 mit den Versorgungsschienen 16, über eine Kontaktierungseinheit 26 mit den Kommunikationsschienen 17 und über eine Kontaktierungseinheit 27 mit den Codierungsschienen 18 verbunden ist. Eine Last, z. B. eine zweite Beleuchtungseinrichtung, ist an einen Lastanschluss 40 des weiteren Basisgeräts 13 angeschlossen. Zusätzlich weist das weitere Basisgerät auch eine Anschlusseinheit für Energieeinspeisung auf.

Mittels der Kommunikationsschienen 17 wird ein interner Bus respektive lokaler Datenbus - vorzugsweise ein serieller Datenbus - innerhalb der Sensoreinheit 1 gebildet, über welchen die Bedien- oder Funktionselemente 3 mit dem Basisgerät 11 sowie ggf. mit weiteren Basisgeräten kommunizieren. Wichtig sind dabei die Verarbeitungseinheiten, welche die Signalumsetzung und gegebenenfalls auch die Abspeicherung gewünschter Signalfolgen bewirken. Beispielsweise
- werden dem Basisgerät 11 über den Drehknopf des Dreh-Drückelements 5 Ansteuerbefehle zur gewünschten Ansteuerung einer angeschlossenen Beleuchtungseinrichtung über den internen Bus zugeführt,
- werden dem Basisgerät 11 über die Wippen 7, 8, 9 des Mehrfach-Tastelements 6 Ansteuerbefehle zur gewünschten Ansteuerung (in Form unterschiedlicher, abgespeicherter Lichtszenen) einer angeschlossenen Beleuchtungseinrichtung (bzw. mehrerer Beleuchtungseinrichtungen) über den internen Bus zugeführt,
- gibt das Basisgerät Meldesignale über den internen Bus (respektive die Kommunikationsschienen 17) an das Display 4 ab, um derart einen aktuellen Geräte-Status, beispielsweise die aktuelle Aussteuerung einer Beleuchtungseinrichtung, zur Anzeige zu bringen,
- kommuniziert das Basisgerät 11 über den mittels der Kommunikationsschienen 17 gebildeten internen Bus mit dem weiteren Basisgerät 13 sowie mit gegebenenfalls vorgesehenen weiteren Basisgeräten, wobei im weiteren Basisgerät / in den weiteren Basisgeräten die Ansteuerbefehle in entsprechende Leistungssignale gewandelt werden.

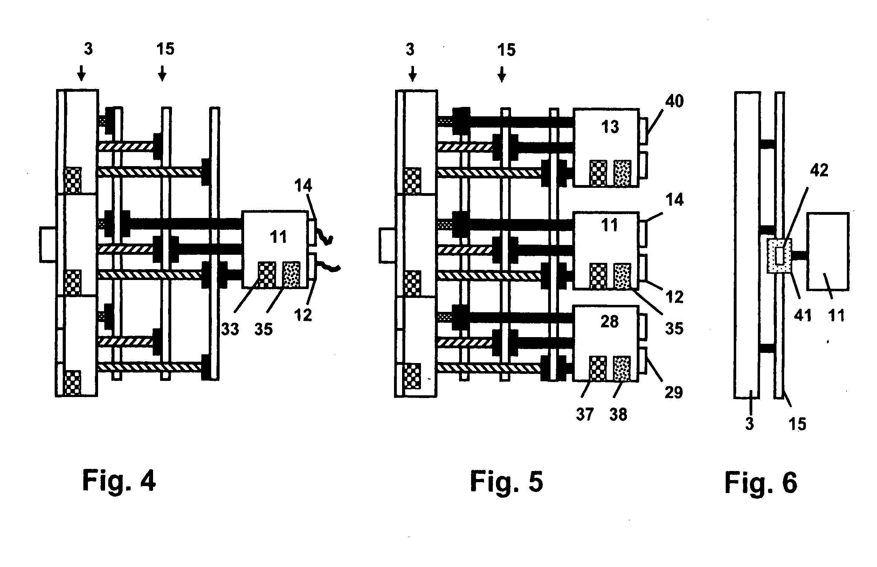

Mittels der Codierungsschienen 18 und der Verarbeitungseinheit des Basisgeräts 11 ist es dem Basisgerät unter Zugrundelegung der über die Codierungsschienen 18 erhaltenen Informationen möglich, selbstständig eine Erkennung der Position eines jeden Bedien- oder Funktionselements 3 innerhalb des Grundträgers durchzuführen. Des Weiteren ist es dem Basisgerät 11 möglich, die Erkennung seiner eigenen Position innerhalb der Sensoreinheit 1 sowie der Positionen der gegebenenfalls vorhandenen weiteren Basisgeräte (siehe z. B. Fig. 1, Bezugsziffer 13 und Fig. 5, Bezugsziffern 13, 28) innerhalb der Sensoreinheit 1 respektive ihres Grundträgers möglich. Der Einsatz der Codierungsschienen 18 inklusive zugeordneter Verarbeitungseinheit im Basisgerät 11 hat den Vorteil, dass bei Inbetriebnahme der Sensoreinheit 1 eine aufwändige individuelle Einstellung/Zuordnung zwischen Positionen und Adressen (für die Kommunikation über den internen Bus) der einzelnen Bedien- oder Funktionselemente 3 der Sensoreinheit nicht erforderlich ist. Diese für die vorstehend erwähnte Kommunikation innerhalb der Sensoreinheit wichtige Zuordnung erfolgt quasi automatisch durch das Basisgerät 11 bei erstmaliger Inbetriebnahme der Sensoreinheit.

Die Kommunikation zwischen den Bedien- oder Funktionselementen 3 und den Basisgeräten 11, 13 erfolgt dann in Kenntnis und unter Beachtung der genauen Positionen der einzelnen Bedien- oder Funktionselemente bzw. der Basisgeräte innerhalb der Sensoreinheit 1, d. h. Adresse und Position eines jeden individuellen Bedien- oder Funktionselements 3 bzw. Basisgeräts werden selbstständig miteinander verknüpft und bei Abgabe und Empfang von Ansteuerbefehlen/Meldesignalen automatisch beachtet.

Wie vorstehend bereits angedeutet, ist es bei Integration eines Displays 4 in der Sensoreinheit 1 somit z. B. möglich, eigenständig unter Zugrundelegung der über die Kommunikationsschienen 17 erhaltenen Daten den aktuellen Funktionszustand eines jeden Bedien- oder Funktionselements 3 festzustellen und über die Kommunikationsschienen im Display 4 zur Darstellung zu bringen.

Das Schema gemäß Fig. 1 soll selbstverständlich lediglich die prinzipielle Konfiguration skizzieren, während die elektrisch leitenden Schienen 15 im konkreten Fall sehr kompakt aufgebaut und vorzugsweise im Grundträger selbst in äußerst flacher Bauart integriert sind.

In Fig. 2 ist eine Sicht auf die Frontseite einer Sensoreinheit dargestellt. Es ist die im Ausführungsbeispiel vertikal ausgerichtete Sensoreinheit 1 mit Display 4, Dreh-Drückelement 5, Mehrfach-Tastelement 6 (hier Dreifach-Tastelement) mit den Wippen 7, 8, 9 als Bedien- oder Funktionselemente 3 zu erkennen. Abschlussdeckleisten 10 schließen die Sensoreinheit 1 nach oben und unten hin ab.

In Fig. 3 ist eine Seitenansicht einer Sensoreinheit dargestellt. Es ist die Sensoreinheit 1 mit Display 4, Dreh-Drückelement 5, Mehrfach-Tastelement 6 (hier Dreifach-Tastelement) mit den Wippen 7, 8, 9 als Bedien- oder Funktionselemente 3 zu erkennen. Abschlussdeckleisten 10 schließen die Sensoreinheit 1 nach oben und unten hin ab. Die Bedien- oder Funktionselemente 3 sind über elektrische leitende Schienen und Kontaktierungen 39 mit dem Basisgerät 11 und dem weiteren Basisgerät 13 verbunden, wobei letztere jeweils in Standard-Unterputzdosen zu montieren sind.

In den Fig. 4 und 5 sind zwei Varianten zur Ausführungsform gemäß Fig. 1 dargestellt, wobei dies selbstverständlich nur Beispiele sind und weitere Varianten in beliebiger Weise realisierbar sind.

Beim Ausführungsbeispiel gemäß Fig. 4 ist als Unterputz-Einsatz lediglich das Basisgerät 11 vorgesehen, während das weitere Basisgerät 13 entfällt. Das Basisgerät 11 weist wiederum die Anschlusseinheit 12 für Energieeinspeisungs-Anschluss (Netz-Anschluss) und den Lastanschluss 14 auf. Das Basisgerät 11 enthält außer Verarbeitungseinheit 33 die Leistungskomponente 35 für die gewünschte und über die Bedienelemente angewählte Speisung der Last in Abhängigkeit der durch Betätigung eines Bedienelements erzeugten Ansteuerbefehle.

Beim Ausführungsbeispiel gemäß Fig. 5 sind als Unterputz-Einsätze außer dem Basisgerät 11 zwei weitere Basisgeräte 13 bzw. 28 vorgesehen, welche jeweils über Kontaktierungseinheiten mit den elektrisch leitenden Schienen 15 verbunden sind und eigene Anschlusseinheiten für Energieeinspeisung sowie Lastanschlüsse 40 bzw. 29 zur Speisung unterschiedlicher Lasten, beispielsweise zwei verschiedene Beleuchtungseinrichtungen und einen Jalousieantrieb, aufweisen. Das Basisgerät 11 weist wiederum die Anschlusseinheit 12 für die Energieeinspeisung (Netz-Anschluss) sowie den Lastanschluss 14 auf. Mit dem Ausführungsbeispiel gemäß Fig. 5 sind unterschiedliche Ausführungsformen realisierbar:
- Es können drei unterschiedliche Lasten (beispielsweise zwei Beleuchtungsanlagen und ein Jalousieantrieb) jeweils individuell und in gewünschter Verknüpfung miteinander angesteuert werden, wobei die Basisgeräte 11, 13, 28 jeweils die erforderlichen ansteuerbaren Leistungskomponenten (sowie Netzteile) aufweisen und die Ansteuerung in gewünschter individueller Art und Weise über die Kommunikationsschienen respektive den internen Bus durchführen.
- Es können zwei unterschiedliche Lasten jeweils individuell und in gewünschter Verknüpfung miteinander angesteuert werden (z. B. speist das Basisgerät 11 eine erste Last und die weiteren Basisgeräte 13, 28 speisen gemeinsam eine zweite Last mit erhöhtem Leistungsbedarf).
- Es kann eine sehr leistungsintensive Last über drei parallel arbeitende Leistungskomponenten der Basisgeräte 11, 13, 28 angesteuert werden.

Wie eingangs bereits erwähnt, sind unter Verwendung der Sensoreinheit 1 komplexe Lichtsteuerungen (Lichtszenen einer Beleuchtungsanlage oder mehrerer Beleuchtungsanlagen) vorprogrammierbar und im Basisgerät 11 einspeicherbar. Ein Abruf einer gewünschten Lichtszene erfolgt durch Betätigung des entsprechenden Bedienelements, d. h. z. B. einer der drei Wippen 7, 8 oder 9. Mittels des Dreh-Drückelements 5 ist es daneben trotzdem möglich, eine Beleuchtungsanlage unabhängig von den eingespeicherten Lichtszenen in gewünschter Art händisch einzustellen.

Ein weiteres Beispiel für die Verwendung der Sensoreinheit 1 ist eine Verknüpfung einer Jalousieansteuerung mit einer Beleuchtungsanlage. Wird mittels eines Bedienelements der Sensoreinheit der Befehl "Jalousie schließen" vorgegeben, so kann damit automatisch ein vorprogrammierter Befehl "Beleuchtung mit eingestellter Lichtszene einschalten" verknüpft werden.

In Fig. 6 ist eine Möglichkeit zur Information des Basisgeräts über Bus-Details dargestellt. Es ist der Anschluss der Bedien- und Funktionselemente 3 sowie des Basisgeräts 11 an die elektrisch leitenden Schienen 15 inklusive Kommunikationsschienen 17 schematisch dargestellt. Die vorstehend unter dem Begriff "Kontaktierungseinheiten 22, 23, 24" erläuterten elektrischen Verbindungen werden in Form eines Verbindungs-Funktionselements 41 realisiert. Dieses Verbindungs-Funktionselements 41 enthält gleichzeitig auch ein Codiermittel 42 zur Kennzeichnung der Art und Weise der Kommunikation, z. B. einen speziellen Widerstand, durch welches dem Basisgerät 11 eindeutig das für die Kommunikation über den Bus erforderliche Protokoll mitgeteilt wird. Durch "Lesen" des Codiermittels 42 wird das Basisgerät in die Lage versetzt, das passende Protokoll aus mehreren zur Verfügung stehenden Protokollen auszuwählen und für die Kommunikation über den internen Bus vorzugeben/einzustellen. In Verbindung mit den vorstehend erwähnten Codierungsschienen ergibt sich der Vorteil, dass ein kompliziertes eigenes Software-Tool für die Inbetriebnahme entbehrlich ist.

### Bezugszeichenliste:

- 1: Sensoreinheit
- 2: ---
- 3: Bedien- oder Funktionselement
- 4: Display (Anzeigeelement)
- 5: Dreh-Drückelement mit Drehknopf
- 6: Mehrfach-Tastelement mit drei Wippen
- 7: Wippe
- 8: Wippe
- 9: Wippe
- 10: Abschlussdeckleisten
- 11: Basisgerät
- 12: Anschlusseinheit des Basisgeräts 11 für die Energieeinspeisung
- 13: Basisgerät
- 14: Lastanschluss des Basisgeräts 11
- 15: elektrisch leitende Schienen
- 16: Versorgungsschienen
- 17: Kommunikationsschienen für lokalen Datenbus
- 18: Codierungsschienen
- 19: Kontaktierungseinheit zwischen Bedien- oder Funktionselement und Versorgungsschienen
- 20: Kontaktierungseinheit zwischen Bedien- oder Funktionselement und Kommunikationsschienen
- 21: Kontaktierungseinheit zwischen Bedien- oder Funktionselement und Codierungsschienen
- 22: Kontaktierungseinheit zwischen Versorgungsschienen und Basisgerät
- 23: Kontaktierungseinheit zwischen Kommunikationsschienen und Basisgerät
- 24: Kontaktierungseinheit zwischen Codierungsschienen und Basisgerät
- 25: Kontaktierungseinheit zwischen Versorgungsschienen und Basisgerät
- 26: Kontaktierungseinheit zwischen Kommunikationsschienen und Basisgerät
- 27: Kontaktierungseinheit zwischen Codierungsschienen und Basisgerät
- 28: Basisgerät
- 29: Lastanschluss des weiteren Basisgeräts 28
- 30: Verarbeitungseinheit des Displays 4
- 31: Verarbeitungseinheit des Dreh-Drückelements 5
- 32: Verarbeitungseinheit des Mehrfach-Tastelements 6
- 33: Verarbeitungseinheit des Basisgeräts 11
- 34: Verarbeitungseinheit des weiteren Basisgeräts 13
- 35: Leistungskomponente des Basisgeräts 11
- 36: Leistungskomponente des weiteren Basisgeräts 13
- 37: Verarbeitungseinheit des weiteren Basisgeräts 28
- 38: Leistungskomponente des weiteren Basisgeräts 28
- 39: elektrisch leitende Schienen und Kontaktierungen
- 40: Lastanschluss des weiteren Basisgeräts 13
- 41: Verbindungs-Funktionselement
- 42: Codiermittel, z. B. Widerstand

## Patentansprüche

1. Sensoreinheit mit mehreren Bedien- oder Funktionselementen (3) und mindestens einem Basisgerät (11),
- wobei das mindestens eine Basisgerät (11) über Kommunikationsschienen (17) mit allen Bedien- oder Funktionselementen (3) elektrisch verbunden ist,
- wobei die Kommunikationsschienen (17) einen internen Bus, vorzugsweise einen seriellen Datenbus, bilden,
- wobei das mindestens eine Basisgerät (11) und die Bedien- oder Funktionselemente (3) jeweils Verarbeitungseinheiten (30, 31, 32, 33) für die Signalumsetzung aufweisen,
- wobei das mindestens eine Basisgerät (11) eine Anschlusseinheit (12) für die Energieeinspeisung und einen Lastanschluss (14) aufweist, welcher von einer Leistungskomponente (35) des Basisgeräts beaufschlagbar ist, **dadurch gekennzeichnet,**
- **dass** Codierungsschienen (18) vorgesehen sind, mittels welcher das Basisgerät (11) unter Zugrundelegung der über die Codierungsschienen (18) erhaltenen Informationen die Position jedes einzelnen Bedien- oder Funktionselements (3), gegebenenfalls mindestens einen weiteren Basisgeräts (13, 29) sowie seine eigene Position innerhalb der Sensoreinheit (1) ermittelt, was wiederum Basis für die Adressvergabe für den internen Bus ist,
- wobei Adresse und Position eines jeden individuellen Bedien- oder Funktionselements (3) bzw. Basisgeräts (13, 29) selbstständig miteinander verknüpft und bei Ausgabe und Empfang von Ansteuerbefehlen/Meldesignalen automatisch beachtet werden.

2. Sensoreinheit nach Anspruch 1, **dadurch gekennzeichnet, dass** mindestens ein weiteres Basisgerät (13, 29) einem ersten Basisgerät (11) unmittelbar räumlich benachbart angeordnet ist, eine Verarbeitungseinheit (34, 37) für den Anschluss an die Kommunikationsschienen (17) besitzt und über eine Leistungskomponente (36, 38) mit nachgeschaltetem Lastanschluss (29, 40) für den Anschluss einer Last verfügt.

3. Sensoreinheit nach Anspruch 1 oder 2, **dadurch gekennzeichnet, dass** Versorgungsschienen (15) zur Versorgung der Bedien- oder Funktionselemente (3) sowie gegebenenfalls des mindestens einen weiteren Basisgeräts (13, 29) vorgesehen sind.

4. Sensoreinheit nach einem der vorstehenden Ansprüche, **dadurch gekennzeichnet, dass** die elektrischen Verbindungen zwischen Basisgerät (11) und Kommunikationsschienen (17) in Form eines Verbindungs-Funktionselements (41) realisiert sind, welches ein Codiermittel (42) zur Kennzeichnung der Art und Weise der Kommunikation enthält.

## Claims

1. A sensor unit with several operating or functional elements (3) and at least one basic device (11);
- with the at least one basic device (11) being electrically connected with all operating or functional elements (3) via communication rails (17);
- with the communication rails (17) forming an internal bus, preferably a serial data bus;
- with the at least one basic device (11) and the operating or functional elements (3) each comprising processing units (30, 31, 32, 33) for the signal conversion;
- with the at least one basic device (11) comprising a connection unit (12) for energy supply and a load connection (14) which can be supplied by a power component (35) of the basic device, **characterized in that**
- encoding rails (18) are provided, by means of which the basic device (11) determining the position of each operating or functional element (3), optionally at least one further basic device (13, 29), and its own position within the sensor unit (1) by using the information obtained via the encoding rails (18), which then forms the basis for the address allocation for the internal bus;
- with address and position of each individual operating or functional element (3) or basic device (13, 29) being linked with each other automatically and being automatically considered in the output and receipt of triggering commands/status signals.

2. A sensor unit according to claim 1, **characterized in that** at least one further basic device (13, 29) is arranged spatially directly adjacent to a first basic device (11), comprises a processing unit (34, 37) for the connection to the communication rails (17) and comprises a power component (36, 38) with load connection (29, 40) in outgoing circuit for the connection to a load.

3. A sensor unit according to claim 1 or 2, **characterized in that** supply rails (15) are provided for supplying the operating or functional elements (3) and optionally the at least one further basic device (13, 29).

4. A sensor unit according to one of the preceding claims **characterized in that** the electric connections between basic device (11) and communication rails (17) are realized in the form of a connection functional element (41) which contains an encoding means (42) for designating the type of communication.

## Revendications

1. Unité de capteur avec plusieurs éléments de commande ou fonctionnels (3) et au moins une unité de base (11),
- dans laquelle l'au moins une unité de base (11) est reliée électriquement par des barres de communication (17) à tous les éléments de commande ou fonctionnels (3),
- dans laquelle les barres de communication (17) forment un bus interne, de préférence un bus de données série,
- dans laquelle l'au moins une unité de base (11) et les éléments de commande ou fonctionnels (3) présentent chacun des unités de traitement (30, 31, 32, 33) pour la conversion des signaux,
- dans laquelle l'au moins une unité de base (11) présente une unité de raccordement (12) pour l'alimentation en énergie et une connexion de charge (14) qui peut être sollicitée par un composant de puissance (35) de l'unité de base,
**caractérisée en ce que** sont prévues des barres de codage (18) au moyen desquelles l'unité de base (11) détermine, sur la base des informations reçues par les barres de codage (18) sur la position de chaque élément de commande ou fonctionnel (3), au besoin d'au moins une autre unité de base (13, 29), ainsi que sa propre position au sein de l'unité de capteur (1), ce qui sert de base à l'attribution d'adresses pour le bus interne,
- l'adresse et la position de chaque élément de commande ou fonctionnel (3) ou unité de base (13, 29) étant associées automatiquement et prises en compte automatiquement lors de l'émission et de la réception d'ordres d'activation et de signaux de notification.

2. Unité de capteur selon la revendication 1, **caractérisée en ce qu'**au moins une autre unité de base (13, 29) est disposée à proximité spatiale immédiate d'une première unité de base (11), possède une unité de traitement (34, 37) pour la connexion aux barres de communication (17) et dispose d'un composant de puissance (36, 38) avec une connexion de charge (29, 40) montée en aval pour le raccordement d'une charge.

3. Unité de capteur selon la revendication 1 ou 2, **caractérisée en ce que** des barres d'alimentation (15) sont prévues pour alimenter les éléments de commande ou fonctionnels (3) et le cas échéant l'au moins une autre unité de base (13, 29).

4. Unité de capteur selon l'une des revendications précédentes, **caractérisée en ce que** les connexions électriques entre l'unité de base (11) et les barres de communication (17) sont réalisées sous la forme d'un élément fonctionnel de connexion (41) qui comporte un moyen de codage (42) destiné à identifier la nature et le mode de la communication.
